# EUROPEAN PATENT SPECIFICATION

(11) **EP 4 555 461 B1**
(45) Date of publication and mention of the grant of the patent: **29.04.2026**
(21) Application number: 23797667.5
(22) Date of filing: 11.10.2023
(51) Int. Cl.: G06Q 10/0639

(54) **SYSTEMS AND METHODS FOR MONITORING ENERGY EFFICIENCY OF THE DRIVE SYSTEMS**
SYSTEME UND VERFAHREN ZUR ÜBERWACHUNG DER ENERGIEEFFIZIENZ VON ANTRIEBSSYSTEMEN
SYSTÈMES ET PROCÉDÉS DE SURVEILLANCE DE L'EFFICACITÉ ÉNERGÉTIQUE DES SYSTÈMES D'ENTRAÎNEMENT

(30) Priority: 28.10.2022 EP 22204348
(43) Date of publication of application: 21.05.2025
(73) Proprietor: Siemens Aktiengesellschaft, 80333 München (DE)
(72) Inventor: BETZ, Stefan, 90449 Nürnberg (DE); SCHLEMBACH, Lukas, 97633 Aubstadt (DE); TSOTOULIDIS, Savvas, 90491 Nürnberg (DE)
(74) Representative: Siemens Patent Attorneys
(86) International application number: PCT/EP2023/078208
(87) International publication number: WO 2024/088760

(56) References cited:
- CN-B- 103 323 701

## Description

The subject-matter disclosed herein relates to systems and methods for monitoring energy efficiency of at least one drive system, in particular of at least one electro-mechanical drive system. CN103323701B is a patent document of interest that describes a mobile electric power energy-efficiency detection method and system, describing how to measure and analyse energy-efficiency data of electrical equipment or systems using a mobile platform to collect, process, and transmit efficiency information.

The subject-matter disclosed herein also relates to a computer program comprising instructions for carrying out the above-mentioned method and to a computer-readable medium comprising such computer program.

When referred to "drives" herein, it is referred to variablefrequency drives (VFDs) that are known as frequency converter, adjustable-frequency drives (AFDs), adjustable-speed drives (ASDs), variable-speed drives (VSDs), AC drives, micro drives, inverter drives or, simply, drives.

Within the scope of the present disclosure, the drive system is a drive and an electric machine, e.g., a motor such as a three-phase motor, e.g., an asynchronous motor. The drive directly supplies the electrical machine in the context of electrical drive technology. Frequency and amplitude can be derived from the operating state of the electrical machine. Sustainability is getting more and more importance in our society and a legislation is accordingly updated that impacts on energy related products. Different sustainability goals are set that apply not only to energy consumption and savings but also in CO2 emissions and material economy. Electric drive systems are fully affected from these activities as energy related products.

Especially, for energy efficiency monitoring purposes it is often required to install external cost intensive sensors for power and energy consumption determination concerning the high frequency spectrum that is introduced from the frequency converter.

Energy consumption and sustainability relevant KPIs monitoring is for sure the first step to establish a green footprint. However, due to the limited energy resources worldwide the minimization of the power consumption as well as the saving potential that state-of-the-art products can achieve and indicate on the end application is an added value. As well as a recommendation system to operate the existing drive in a more efficient way.

The goal of the present disclosure is to provide a system to monitor energy efficiency of one or more drive systems in a real-time.

The goal is achieved by a system the system comprising a memory that stores machine-executable components, a processor that is operatively coupled to the memory, and is configured to execute the machine-executable components, and an interface that is configured to query and receive and/or collect real-time sensor data from a drive of the at least one drive system, wherein the sensor data is based on measurements performed by sensors comprised by the drive and is representative of an operational state of the at least one drive system. The machine-executable components comprise a drive system analyzer component configured to
- receive the sensor data via the interface,
- executing an energy efficiency model on the sensor data to calculate at least one energy efficiency relevant key performance indicator (KPI) of the at least one drive system
- provide the at least one energy efficiency relevant KPI of the at least one drive system.

The sensor data is collected by the sensors that are already present within the drive and not by some external sensors and/or hardware devices. This is very advantageous, since each external sensor increase the costs, but also the energy consumption and the CO₂ footprint of the monitoring system.

In an embodiment, the interface is configured to query the sensor data with an interface-specific sampling frequency, e.g., 100 milliseconds. "Interface-specific" means that the sampling is performed with a maximum sampling frequency, which can be achieved by using this particular interface. This usually depends on hardware of the interface.

In an embodiment the interface comprises one or more data busses.

In an embodiment, the drive system analyzer component is configured to aggregate the sensor data for a predetermined time period, e.g., for five minutes.

In an embodiment, the real-time sensor data comprises torque, rotational speed, frequency (output frequency of the drive), actual current (RMS current), rated drive current, rated drive supply voltage, power factor (cos φ), DC link voltage.

In an embodiment, said executing energy efficiency model comprises determining at least one of
- mechanical power of an electric machine of the at least one drive system,
- utilization degree of the drive (converter utilization degree),
- power loss of the drive,
- power loss of a reference drive.

The description of the reference drive and its losses can be acquired from a standard or another norm. In particular this information is acquired from a standard set by the IEC (International Electrotechnical Commission), e.g., from the standard IEC61800-9-2.

In an embodiment, said executing energy efficiency model further comprises determining at least one of
- based on the mechanical power of an electric machine of the at least one drive system, a power loss of the electric machine,
- based on the power loss of the drive, a power consumption of the at least one drive system,
- based on the power loss of the drive and the power loss of the reference drive, a power losses ratio in the drive and/or power savings due to/achieved by using the drive, when compared to using the reference drive.

In an embodiment, said executing energy efficiency model further comprises determining at least one of
- based on the power savings, saved energy resulting from using the drive system compared to using the reference drive,
- based on the power consumption of the at least one drive system, an energy consumption of the at least one drive system.

In an embodiment, said executing energy efficiency model further comprises determining at least one of
- based on the saved energy, costs and/or CO₂ savings for the at least one drive system,
- based on the energy consumption of the drive system, operation costs for the at least one drive system and/or CO₂ emissions/footprint produced by the at least one drive system.

In an embodiment, the energy efficiency relevant KPI is from the group: power loss of the drive, power loss of a reference drive, power loss of an electric machine of the at least one drive system, utilization degree of the drive, power consumption of the drive, energy consumption of the at least one drive system, operating costs, CO₂ equivalent emission, power losses ratio, power savings, energy savings, CO₂ savings, cost savings.

In an embodiment, the system further comprises a user interface configured to receive user commands to configure
- the drive system analyzer component to determine, which sensor data is to be queried/collected by the interface from the drive of the at least one drive system and/or
- the energy efficiency model.

Configuring the drive system analyzer component in this case may also involve configuring the interface via the drive system analyzer component. In an embodiment, the interface may comprise a data collector, which can be designed as a software component and can be configurable via a (first) user interface that can be directly connected to the data collector.

In an embodiment, the machine-executable components comprise a recommendation component configured to, based on the at least one energy efficiency relevant KPI of the at least one drive system,
a) to propose an eco-friendly operation setting for the drive / frequency converter, and/or
b) to propose actions for bypassing or shutting down the drive / frequency converter to reduce consumption of resources, and/or
c) to indicate energy savings in case of installing of a more energy efficient electric machine (e.g., IE5 PEM motor, SynRM motor etc.) and/or more energy efficient drive/frequency converter and/or a drive/frequency converter with regenerative capability.

Proposing an eco-friendly operation setting may include but not limited to, based on one or more KPIs, change in switching frequency of the drive, propose control techniques that aim on motor magnetic flux optimization, propose a selection of proper pulse modulator, especially in the overmodulation area.

In an embodiment, the machine-executable components comprise a visualization component configured to, based on the at least one energy efficiency relevant KPI, provide at least one signal to visualize the at least one energy efficiency relevant KPI.

In an embodiment, the at least one signal is designed to be visualized in form of at least one widget.

In an embodiment, the signal comprises at least the information regarding the power losses ratio KPI, and the widget comprises a region to visualize a current efficiency mode, which is defined based on preset limit values (in percent) for the power losses ratio KPI.

In an embodiment, the region is designed as circle that can be colored green, if the power losses ratio is less or equal than a first preset limit value, yellow, if the power losses ratio is larger than the first preset limit value and is less or equal than a second preset limit value, and red, if the power losses ratio is larger than the second preset limit value.

The goal is also achieved by a computer-aided method for monitoring energy efficiency of at least one drive system, in particular of at least one electro-mechanical drive system, the method comprising:
- querying, e.g., via or by the interface, and receiving, e.g., at the drive system analyzer, real-time sensor data from a drive of the at least one drive system, wherein the sensor data is based on measurements performed by sensors comprised by the drive and is representative of an operational state of the at least one drive system,
- executing, e.g., at the drive system analyzer, an energy efficiency model on the sensor data to calculate at least one energy efficiency relevant key performance indicator (KPI) of the at least one drive system,
- providing, e.g., at the interface or at a user interface, the at least one energy efficiency relevant KPI of the at least one drive system.

In an embodiment, the method further comprises configuring the energy efficiency model.

In an embodiment, the method further comprises configuring the drive system analyzer component to determine, which sensor data is to be queried/collected by the interface from the drive of the at least one drive system.

In an embodiment, the method further comprises, based on the at least one energy efficiency relevant KPI of the at least one drive system,
a) proposing an eco-friendly operation setting for the drive / frequency converter, and/or
b) proposing actions for bypassing or shutting down the drive / frequency converter in order to reduce/save resources, and/or
c) indicating energy savings in case of a installing of a more energy efficient electric machine (e.g., IE5 PEM motor, SynRM motor etc.) and/or more energy efficient drive/frequency converter and/or a drive/frequency converter with regenerative capability.

The above and other aspects and advantages of the subject matter disclosed herein will be further discussed in conjunction with the accompanying drawings, which indicate only some possible ways that may be practiced. The like reference characters in the drawings refer to like parts throughout.
- FIG 1: shows an example of an OT infrastructure,
- FIG 2: shows KPI visualization in form of widgets, and
- FIG 3: shows an energy efficiency model.

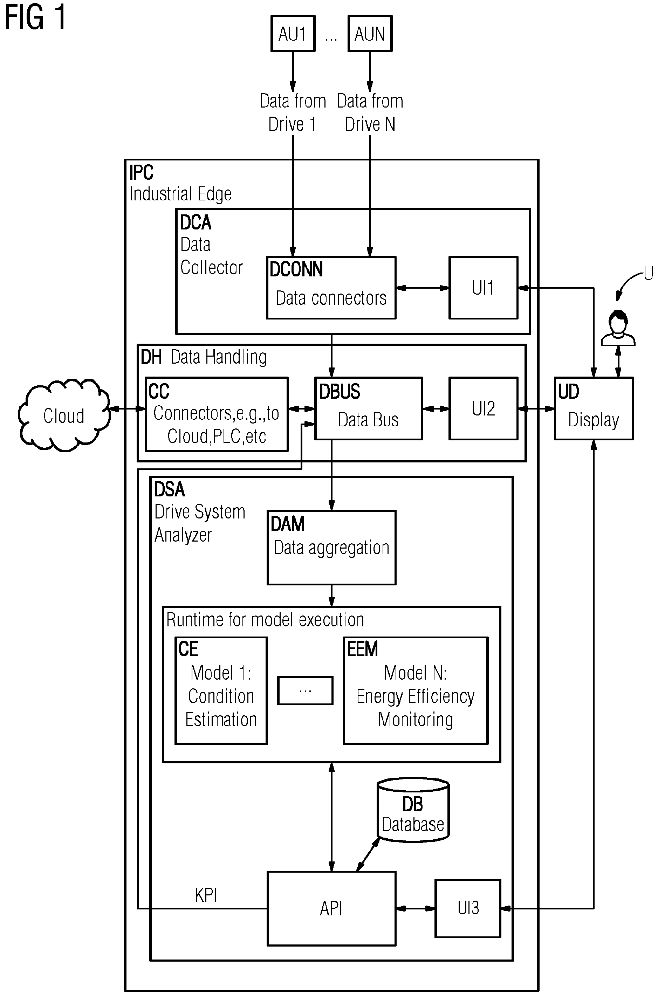

FIG 1 shows an exemplified OT (operational technology) infrastructure for implementing the subject-matter disclosed herein.

The infrastructure comprises a plurality (1, 2, 3, 4, ..., N) of drive systems and at least one industrial PC (personal computer) IPC.

It will be appreciated by those skilled in the art that the industrial PC can be exchanged by any on-prem and/or cloud computing device.

Each drive system comprises a drive unit AU1, ..., AUN, e.g., a frequency converter that drives an electric machine, e.g., an electric motor.

The industrial PC IPC can be designed as an edge device comprising one or more ports, data busses DBUS, data connectors CC, interfaces, e.g., user interfaces UI1, UI2, UI2, etc.

In particular, the industrial PC IPC comprises a data collector DCA, which can be designed as a software program, such as application.

The data collector app DCA is configured to query and/or collect real-time sensor data from the plurality of the drives AU1, ..., AUN of the corresponding drive systems.

In an embodiment, the data collector DCA may have several different data connectors DCONN, e.g., HF, LF (for high/low frequency) connector, a fingerprint connector, etc. to query specific data from the drives AU1, ..., AUN. The configuration of the data connectors DCONN can be provided by API (application programming interface).

The sensor data is based on measurements performed by sensors comprised by the corresponding drive AU1, ..., AUN and is representative of an operational state of the at least one drive system. In particular the data is relevant for determining energy efficiency of the at least one drive system.

For example, the sensor data can comprise torque T, rotational speed n, frequency f (output frequency of the drive), actual current I (RMS current), rated drive current I_{N}, rated drive supply voltage U_{N}, power factor (cos of phi), DC link voltage U.

Further data can be provided to or queried by the data collector DCA. In an embodiment, the machine-readable product designation of each drive AU1, ..., AUN, nominal grid frequency, etc.

In an embodiment, the raw data, e.g., in form of time series is provided / queried continuously.

The data collector DCA can comprise a first user interface UI1 that is configured to receive user commands to configure, which sensor data is to be collected and/or with which sampling frequency. The sampling frequency is data-collector-specific. In an embodiment, the sampling frequency depends on hardware properties of a data bus that is used by the industrial PC IPC to collect/query the data from the drives AU1, ..., AUN.

In an embodiment, a user U can be connected to the first user interface UI1 via Internet, e.g., by using an http protocol.

The data collector app DCA passes the data (the raw data) for further data handling DH. In an embodiment, an MQTT protocol is used to communicate between the data collector DCA and the data handling level DH. The data handling DH can be performed over a data bus DBUS, which can be connected to one or more connectors CC, e.g., a cloud connector, e.g., via http, PLCs, e.g., via MQTT etc.

In an embodiment, the data bus DBUS can be connected to a second user interface UI2 configured to receive user commands for data routing. E.g., it can be configured to forward part of raw data to a cloud service, e.g., for model training, etc. In an embodiment, a user U can be connected to the second user interface UI2 via Internet, e.g., by using the http protocol.

The data handling module DH can provide resources for various further data services or for an information hub.

Via the data bus DBUS the sensor data is forwarded to a drive system analyzer DSA. MQTT communication protocol can be used here as well. In an embodiment, the drive system analyzer is a software component. In an embodiment, the drive system analyzer DSA can be designed as an app, e.g., an edge app.

In an embodiment, the drive system analyzer DSA can comprise a data aggregation module DAM configured to buffer a predetermined amount of data. In an embodiment, the data aggregation module is configured to buffer the sensor data for five minutes. By choosing an appropriate sampling frequency enough of sensor data can be aggregated in five minutes to produce a single data point.

The drive system analyzer DSA provides an environment for executing one or more models - a runtime, e.g., in Python programming language. For example, the drive system analyzer DSA can comprise a model for condition estimation CE of the drive and/or of the electric machine, e.g., of a motor.

To estimate the energy efficiency of each drive system the drive system analyzer DSA comprises an executable energy efficiency model EEM.

In an embodiment, the drive system analyzer DSA can comprise a database DB, which stores various models, configurations, results of previous analysis by various models etc.

The energy efficiency model EEM is designed to receive the (aggregated) sensor data and to calculate at least one energy efficiency relevant key performance indicator (KPI) of the corresponding drive system.

The drive system analyzer DSA and its modules, e.g., the data aggregation module DAM, the energy efficiency model EEM, etc. can be configured via a third user interface UI3.

The third user interface UI3 can be also used to provide the KPIs to the user U. The user U can configure the model and adjust its settings with the aid of the third user interface UI3. E.g., the user U may set price per kWh, emitted CO₂ per kWh, set mains frequency and/or voltage, etc. This can be useful for a visualization of the energy efficiency.

In an embodiment, the energy efficiency relevant KPI is from the group: power loss of the drive, power loss of a reference drive, power loss of an electric machine of the at least one drive system, utilization degree of the drive, power consumption of the drive, energy consumption of the at least one drive system, operating costs, CO₂ equivalent emission, power losses ratio, power savings, energy savings, CO₂ savings, cost savings.

In an embodiment, the at least one KPI can be forwarded to the cloud service for further analysis or to train AI models.

In an embodiment, the KPI or KPIs can be forwarded to the user U via the third user interface UI3 for monitoring purposes and/or further analysis.

In an embodiment, the drive system analyzer DSA comprises a visualization component configured to, based on the at least one energy efficiency relevant KPI, provide at least one signal to visualize the at least one energy efficiency relevant KPI. This signal can be sent to the user's U display device UD.

In an embodiment, the user U can access the first, the second and the third user interfaces by using a computing device, e.g., via http. This means that the user U does not have to be physically present at the place of employment of the drive systems and can be somewhere else.

In an embodiment, the user U can configure the energy efficiency model EEM - adjust its settings.

In an embodiment, the drive system analyzer DSA can comprise an application programming interface API that allows for configuration of the drive system analyzer DSA. In an embodiment, it allows to configure energy efficiency model EEM (and other models), and/or data handling within the drive system analyzer DSA, e.g., data aggregation, providing the energy efficiency KPIs, visualization, etc.

In an embodiment, the drive system analyzer DSA can comprise a recommendation component. The recommendation component is configured to receive one or more energy efficiency relevant KPI of the at least one drive system as an input and, based on the KPI value, to propose an eco-friendly operation setting for the frequency converter.

In an embodiment, the recommendation component is configured to propose actions for bypassing or shutting down the frequency converter to reduce/save resources.

In an embodiment the recommendation component is configured to indicate energy savings in case of a new installation of the most efficiency product (e.g., IE5 PEM motor, SynRM motor etc.)

The signal for visualization of one or more KPIs can be sent to user's U computation device and visualized on its display UD.

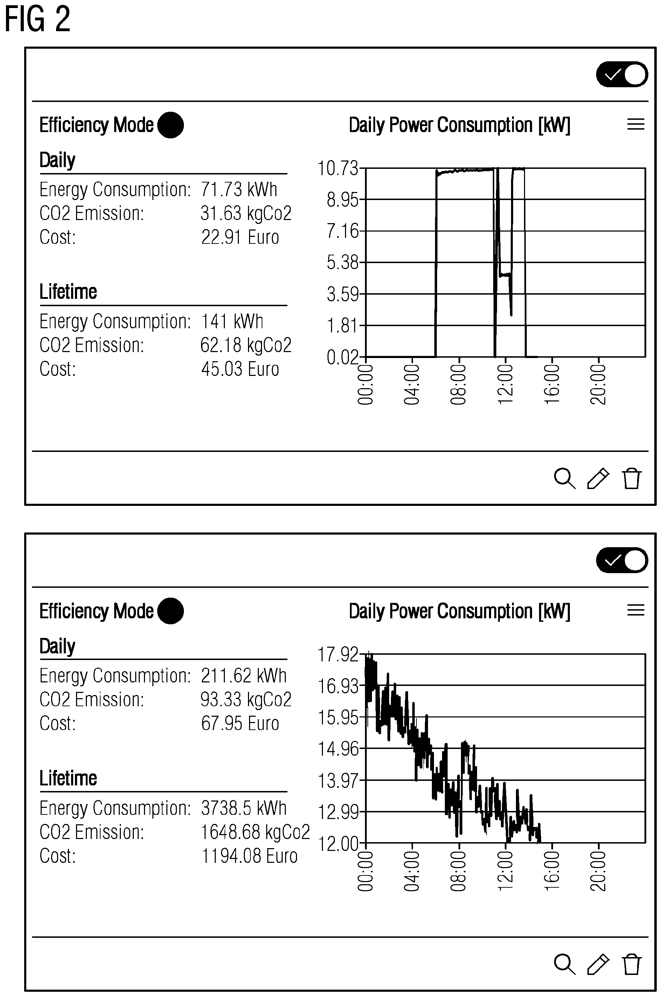

FIG 2 illustrates examples of two widgets that can be provided via the display device UD to the user U. The widgets regard to different industrial applications and show daily power consumption in kW over the time. The efficiency mode of the corresponding drive system can be specified, e.g., by a colored circle. In an embodiment, the circle can be colored green, yellow or red, depending on the efficiency of the operating mode.

In an embodiment, the widgets provide information about daily development of the KPIs (energy consumption, CO₂ emission, cost) as well as their historical behavior.

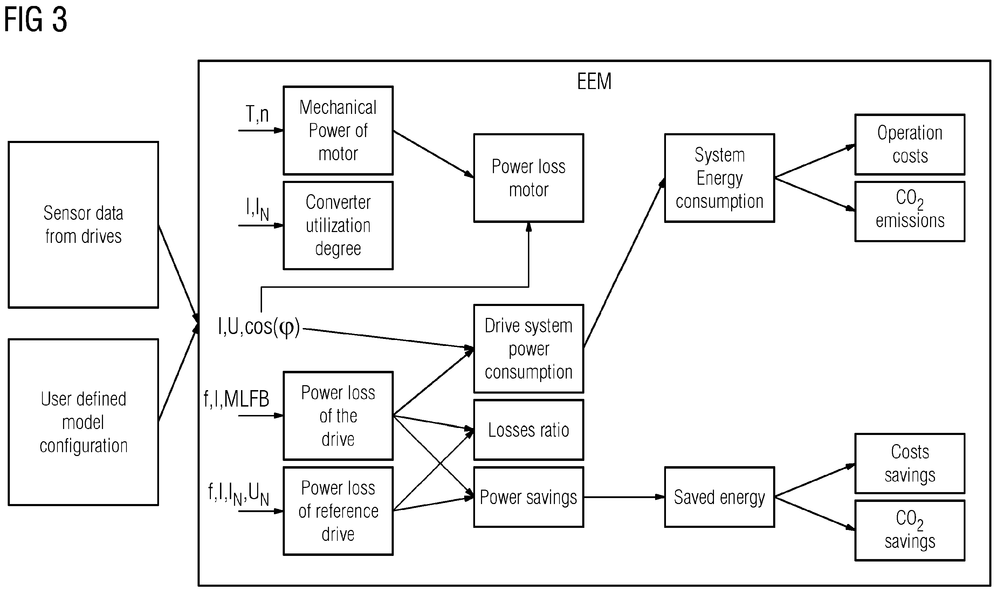

Turning to FIG 3 an example of a calculation of the energy efficiency KPIs by the energy efficiency model EEM is presented as a flowchart.

As discussed above, the energy efficiency model EEM can receive torque T, rotation speed n, RMS value of the current I, rated current I_{N}, machine-readable product designation MLFB, output frequency of the drive f, power factor cos (φ), and rated line supply voltage U_{N}.

The energy efficiency model EEM can be preconfigured by the user U. In particular the user U can be asked to input line voltage, CO2 emission factor, electricity price, etc.

Based on the input sensor data and on the user's configuration, the energy efficiency model can determine at first one or more of
- mechanical power of the motor of the corresponding drive system,
- utilization degree of the drive (converter utilization degree),
- power loss of the drive,
- power loss of a reference drive.

In an embodiment, the energy efficiency model can determine power loss of the corresponding motor based on the mechanical power of the motor.

In an embodiment, the energy efficiency model can determine power consumption of each drive system based on the power loss of the drive.

In an embodiment, the energy efficiency model can determine power losses ratio in the drive and/or power savings due to/achieved by using the drive, when compared to using the reference drive, based on the power loss of the drive and the power loss of the reference drive.

In an embodiment, based on the power losses ratio.

In an embodiment, the energy efficiency model can determine saved energy resulting from using the drive in the drive system compared to using the reference drive, based on the power savings.

In an embodiment, the energy efficiency model can determine energy consumption of each drive system, based on the power consumption of the drive system.

In an embodiment, the energy efficiency model can determine costs and/or CO₂ savings for each drive system, based on the saved energy.

In an embodiment, the energy efficiency model can determine operation costs for the at least one drive system and/or CO₂ emissions/footprint produced by the at least one drive system, based on the energy consumption of the drive system.

The above-described embodiments of the present disclosure are presented for purposes of illustration and not of limitation. In particular, the embodiments described with regard to figures are only few examples of the embodiments described in the introductory part. Technical features that are described with regard to systems can be applied to augment methods disclosed herein and *vice versa.*

## Claims

1. System for monitoring energy efficiency of at least one drive system, the system comprising
- a memory that stores machine-executable components,
- a processor that is operatively coupled to the memory, and is configured to execute the machine-executable components, and
- an interface (DCA) that is configured to query and receive real-time sensor data from a drive (AU1, ..., AUN) of the at least one drive system, wherein the sensor data is based on measurements performed by sensors comprised by the drive and is representative of an operational state of the at least one drive system, wherein the machine-executable components comprise a drive system analyzer (DSA) component configured to
- receive the sensor data via the interface (DCA),
- executing an energy efficiency model (EEM) on the sensor data to calculate at least one energy efficiency relevant key performance indicator - an energy efficiency relevant KPI - of the at least one drive system,
provide the at least one energy efficiency relevant KPI of the at least one drive system, wherein the interface (DCA) is configured to query the sensor data with an interface-specific sampling frequency, wherein the interface comprises one or more data busses, wherein the drive system analyzer component (DSA) is configured to aggregate the sensor data for a predetermined time period,
further comprising a user interface configured to receive user commands to configure
- the drive system analyzer component to determine, which sensor data is to be queried/collected by the interface from the drive of the at least one drive system and/or
- the energy efficiency model, wherein the machine-executable components comprise a recommendation component configured to, based on the at least one energy efficiency relevant KPI of the at least one drive system,
a) to propose an eco-friendly operation setting for the drive (AU1, ..., AUN), and/or
b) to propose actions for bypassing or shutting down the drive (AU1, ..., AUN) to save resources, and/or
c) to indicate energy savings in case of installing of a more energy efficient electric machine.

2. System of any one of Claims 1, wherein the real-time sensor data comprises torque, rotational speed, frequency, actual current, rated drive current, rated drive supply voltage, power factor, DC link voltage.

3. System of any one of Claims 1 to 2, wherein the energy efficiency relevant KPI is from the group: power loss of the drive, power loss of a reference drive, power loss of an electric machine of the at least one drive system, utilization degree of the drive, power consumption of the drive, energy consumption of the at least one drive system, operating costs, CO₂ equivalent emission, power losses ratio, power savings, energy savings, CO₂ savings, cost savings.

4. System of any one of Claims 1 to 3, wherein the machine-executable components comprise a visualization component configured to, based on the at least one energy efficiency relevant KPI, provide at least one signal to visualize the at least one energy efficiency relevant KPI.

5. System of Claim 4, wherein the at least one signal is designed to be visualized in form of at least one widget.

6. A computer-aided method for monitoring energy efficiency of at least one drive system, the method comprising:
- querying and receiving real-time sensor data from a drive (AU1, ..., AUN) of the at least one drive system, wherein the sensor data is based on measurements performed by sensors comprised by the drive and is representative of an operational state of the at least one drive system,
- executing an energy efficiency model (EEM) on the sensor data to calculate at least one energy efficiency relevant key performance indicator (KPI) of the at least one drive system,
- providing the at least one energy efficiency relevant KPI of the at least one drive system, wherein the interface (DCA) is configured to query the sensor data with an interface-specific sampling frequency, wherein the interface comprises one or more data busses, wherein the drive system analyzer component (DSA) is configured to aggregate the sensor data for a predetermined time period, further comprising: configuring the energy efficiency model (EEM), further comprising, based on the at least one energy efficiency relevant KPI of the at least one drive system,
a) proposing an eco-friendly operation setting for the drive (AU1, ..., AUN),
b) proposing actions for bypassing or shutting down the drive (AU1, ..., AUN) to save resources, or
c) indicating energy savings in case of installing of a more energy efficient electric machine.

7. A computer program comprising instructions which, when the program is executed by a system according to any one of Claims 1 to 5, cause the computer to carry out a method according to Claim 6.

8. A computer-readable medium comprising a computer program according to Claim 7.

## Patentansprüche

1. System zum Überwachen der Energieeffizienz mindestens eines Antriebssystems, wobei das System Folgendes umfasst:
- einen Speicher, in dem maschinenausführbare Komponenten gespeichert sind,
- einen Prozessor, der operativ mit dem Speicher gekoppelt ist und dazu ausgelegt ist, die maschinenausführbaren Komponenten auszuführen, und
- eine Schnittstelle (DCA), die dazu ausgelegt ist, Echtzeit-Sensordaten von einem Antrieb (AU1, ..., AUN) des mindestens einen Antriebssystems abzufragen und zu empfangen, wobei die Sensordaten auf Messungen basieren, die von in dem Antrieb enthaltenen Sensoren durchgeführt werden, und einen Betriebszustand des mindestens einen Antriebssystems repräsentieren, wobei
die maschinenausführbaren Komponenten umfassen eine Antriebssystemanalysator (DSA)-Komponente umfasst, die zu Folgendem ausgelegt ist:
- Empfangen der Sensordaten über die Schnittstelle (DCA),
- Ausführen eines Energieeffizienzmodells (EEM) an den Sensordaten zur Berechnung mindestens eines energieeffizienzrelevanten Leistungskennwerts - eines energieeffizienzrelevanten KPI - des mindestens einen Antriebssystems,
Bereitstellen des mindestens einen energieeffizienzrelevanten KPI des mindestens einen Antriebssystems, wobei die Schnittstelle (DCA) dazu ausgelegt ist, die Sensordaten mit einer schnittstellenspezifischen Abtastfrequenz abzufragen, wobei die Schnittstelle einen oder mehrere Datenbusse umfasst, wobei die Antriebssystemanalysatorkomponente (DSA) dazu ausgelegt ist, die Sensordaten für einen vorbestimmten Zeitraum zu aggregieren,
ferner umfassend eine Benutzerschnittstelle, ausgelegt zum Empfangen von Benutzerbefehlen zum Konfigurieren
- der Antriebssystemanalysatorkomponente zum Bestimmen, welche Sensordaten durch die Schnittstelle von dem Antrieb des mindestens einen Antriebssystems abgefragt/erfasst werden sollen, und/oder
- des Energieeffizienzmodells, wobei die maschinenausführbaren Komponenten eine Empfehlungskomponente umfassen, ausgelegt zum, basierend auf dem mindestens einen energieeffizienzrelevanten KPI des mindestens einen Antriebssystems,
a) Vorschlagen einer umweltfreundlichen Betriebseinstellung für den Antrieb (AU1, ..., AUN) und/oder
b) Vorschlagen von Maßnahmen zum Umgehen oder Herunterfahren des Antriebs (AU1, ..., AUN), um Ressourcen zu sparen, und/oder
c) Angeben von Energieeinsparungen bei Installation einer energieeffizienteren elektrischen Maschine.

2. System nach Anspruch 1, wobei die Echtzeit-Sensordaten Drehmoment, Drehzahl, Frequenz, Ist-Strom, Nennantriebsstrom, Nennantriebsversorgungsspannung, Leistungsfaktor, Zwischenkreisspannung umfassen.

3. System nach einem der Ansprüche 1 bis 2, wobei der energieeffizienzrelevante KPI aus der folgenden Gruppe stammt: Leistungsverlust des Antriebs, Leistungsverlust eines Referenzantriebs, Leistungsverlust einer elektrischen Maschine des mindestens einen Antriebssystems, Nutzungsgrad des Antriebs, Leistungsverbrauch des Antriebs, Energieverbrauch des mindestens einen Antriebssystems, Betriebskosten, CO₂-Äquivalent-Emissionen, Leistungsverlustverhältnis, Leistungseinsparungen, Energieeinsparungen, CO₂-Einsparungen, Kosteneinsparungen.

4. System nach einem der Ansprüche 1 bis 3, wobei die maschinenausführbaren Komponenten eine Visualisierungskomponente umfassen, die dazu ausgelegt ist, basierend auf dem mindestens einen energieeffizienzrelevanten KPI mindestens ein Signal zum Visualisieren des mindestens einen energieeffizienzrelevanten KPI bereitzustellen.

5. System nach Anspruch 4, wobei das mindestens eine Signal dazu ausgebildet ist, in Form mindestens eines Widgets visualisiert zu werden.

6. Computergestütztes Verfahren zum Überwachen der Energieeffizienz mindestens eines Antriebssystems, wobei das Verfahren Folgendes umfasst:
- Abfragen und Empfangen von Echtzeit-Sensordaten von einem Antrieb (AU1, ..., AUN) des mindestens einen Antriebssystems, wobei die Sensordaten auf Messungen basieren, die von in dem Antrieb enthaltenen Sensoren durchgeführt werden, und einen Betriebszustand des mindestens einen Antriebssystems repräsentieren,
- Ausführen eines Energieeffizienzmodells (EEM) an den Sensordaten zur Berechnung mindestens eines energieeffizienzrelevanten Leistungskennwerts (KPI) des mindestens einen Antriebssystems,
- Bereitstellen des mindestens einen energieeffizienzrelevanten KPI des mindestens einen Antriebssystems, wobei die Schnittstelle (DCA) dazu ausgelegt ist, die Sensordaten mit einer schnittstellenspezifischen Abtastfrequenz abzufragen, wobei die Schnittstelle einen oder mehrere Datenbusse umfasst, wobei die Antriebssystemanalysatorkomponente (DSA) dazu ausgelegt ist, die Sensordaten für einen vorbestimmten Zeitraum zu aggregieren, ferner umfassend: Konfigurieren des Energieeffizienzmodells (EEM), ferner umfassend, basierend auf dem mindestens einen energieeffizienzrelevanten KPI des mindestens einen Antriebssystems,
a) Vorschlagen einer umweltfreundlichen Betriebseinstellung für den Antrieb (AU1, ..., AUN),
b) Vorschlagen von Maßnahmen zum Umgehen oder Herunterfahren des Antriebs (AU1, ..., AUN), um Ressourcen zu sparen, oder
c) Angeben von Energieeinsparungen bei Installation einer energieeffizienteren elektrischen Maschine.

7. Computerprogramm, das Anweisungen umfasst, die bei Ausführung des Programms durch ein System nach einem der Ansprüche 1 bis 5 bewirken, dass der Computer ein Verfahren nach Anspruch 6 durchführt.

8. Computerlesbares Medium, das ein Computerprogramm nach Anspruch 7 umfasst.

## Revendications

1. Système de contrôle de l'efficacité énergétique d'au moins un système d'entraînement, le système comprenant
- une mémoire, qui met en mémoire des composants exécutables par machine,
- un processeur, qui est raccordé fonctionnellement à la mémoire et qui est configuré pour exécuter les composants exécutables par machine, et
- une interface (DCA), qui est configurée pour demander et recevoir une donnée de capteur en temps réel d'un entraînement (AU1, ..., AUN) du au moins un système d'entraînement, dans lequel la donnée de capteur repose sur des mesures effectuées par des capteurs compris dans l'entraînement et est représentative d'un état de fonctionnement du au moins un système d'entraînement, dans lequel les composants exécutables par machine comprennent un composant analyseur (DSA) du système d'entraînement, configuré pour
- recevoir la donnée de capteur par l'intermédiaire de l'interface (DCA),
- exécuter un modèle (EEM) d'efficacité énergétique sur la donnée de capteur pour calculer au moins un indicateur de performance clé pertinent pour l'efficacité énergétique - un KPI pertinent pour l'efficacité énergétique - du au moins un système d'entraînement,
donner le au moins un KPI pertinent pour l'efficacité énergétique du au moins un système d'entraînement, dans lequel l'interface (DCA) est configurée pour demander la donnée de capteur à une fréquence d'échantillonnage spécifique à l'interface, dans lequel l'interface comprend un ou plusieurs bus de données, dans lequel le composant (DSA) analyseur du système d'entraînement est configuré pour agréger la donnée de capteur pendant une durée déterminée à l'avance,
comprenant en outre une interface d'utilisateur configurée pour recevoir des instructions d'utilisateur, afin de configurer
- le composant analyseur du système d'entraînement, pour qu'il détermine la donnée de capteur, qui doit être demandée /recueillie par l'interface à partir de l'entraînement du au moins un système d'entraînement et/ou du modèle d'efficacité énergétique, dans lequel les composants exécutables par machine comprennent un composant de recommandation configuré pour, sur la base du au moins un KPI pertinent pour l'efficacité énergétique du au moins un système d'entraînement,
a) proposer un réglage de fonctionnement éco-favorable pour l'entraînement (AU1, ..., AUN), et/ou
b) proposer des actions pour court-circuiter ou fermer l'entraînement (AU1, ..., AUN) pour sauvegarder des ressources, et/ou
c) indiquer des économies d'énergie dans le cas du montage d'une machine électrique ayant plus d'efficacité énergétique.

2. Système de l'une quelconque des revendications 1, dans lequel la donnée de capteur en temps réel comprend un couple, une vitesse de rotation, une fréquence, un courant en cours, un courant d'entraînement nominal, une tension d'alimentation d'entraînement nominale, un facteur de puissance, une tension de liaison en courant continu.

3. Système de l'une quelconque des revendications 1 à 2, dans lequel le KPI pertinent pour l'efficacité énergétique est choisi dans le groupe : perte de puissance de l'entraînement, perte de puissance d'un entraînement de référence, perte de puissance d'une machine électrique ou du au moins un système d'entraînement, degré d'utilisation de l'entraînement, consommation de puissance de l'entraînement, consommation d'énergie du au moins un système d'entraînement, coût de fonctionnement, émission en équivalent CO₂, rapport de pertes de puissance, économies de puissance, économies d'énergie, économies de CO₂, économies de coût.

4. Système de l'une quelconque des revendications 1 à 3, dans lequel les composants exécutables par machine comprennent un composant de visualisation configuré pour, sur la base du au moins un KPI pertinent pour l'efficacité énergétique, donner au moins un signal pour visualiser le au moins un KPI pertinent pour l'efficacité énergétique.

5. Système de la revendication 4, dans lequel le au moins un signal est conçu pour être visualisé sous la forme d'au moins une vignette.

6. Un procédé assisté par ordinateur pour contrôler l'efficacité énergétique d'au moins un système d'entraînement, le procédé comprenant :
- demander et recevoir une donnée de capteur en temps réel d'un entraînement (AU1, ..., AUN) du au moins un système d'entraînement, dans lequel la donnée de capteur repose sur des mesures effectuées par des capteurs compris dans l'entraînement et est représentative d'un état de fonctionnement du au moins un système d'entraînement,
- exécuter un modèle (EEM) d'efficacité énergétique sur la donnée de capteur pour calculer au moins un indicateur (KPI) de performance clé pertinent pour l'efficacité énergétique du au moins un système d'entraînement,
- donner le au moins un KPI pertinent pour l'efficacité énergétique du au moins un système d'entraînement, dans lequel l'interface (DCA) est configurée pour demander la donnée de capteur à une fréquence d'échantillonnage spécifique à l'interface, dans lequel l'interface comprend un ou plusieurs bus de données, dans lequel le composant (DSA) analyseur du système d'entraînement est configuré pour agréger la donnée de capteur pendant une durée déterminée à l'avance, comprenant en outre : configurer le modèle (EEM) d'efficacité énergétique, comprenant en outre, sur la base du au moins un KPI pertinent pour l'efficacité énergétique du au moins un système d'entraînement,
a) proposer un réglage de fonctionnement éco-favorable pour l'entraînement (AU1, ..., AUN),
b) proposer des actions pour court-circuiter ou fermer l'entraînement (AU1, ..., AUN) pour sauvegarder des ressources, ou
c) indiquer des économies d'énergie dans le cas du montage d'une machine électrique ayant plus d'efficacité énergétique.

7. Un programme d'ordinateur comprenant des instructions, qui, lorsque le programme est exécuté par un système suivant l'une quelconque des revendications 1 à 5, font que l'ordinateur effectue un procédé suivant la revendication 6.

8. Un support déchiffrable par ordinateur comprenant un programme d'ordinateur suivant la revendication 7.
